# EUROPÄISCHE PATENTANMELDUNG

(11) **EP 1 043 884 A1**
(43) Veröffentlichungstag der Anmeldung: **11.10.2000**
(21) Anmeldenummer: 99107053.3
(22) Anmeldetag: 09.04.1999
(51) Int. Cl.: H04N 1/00, H04N 1/32

(54) **Mobile Speichereinrichtung**

(71) Anmelder: SIEMENS AKTIENGESELLSCHAFT, 80333 München (DE)
(72) Erfinder: Hehle, Mario, Dipl.-Phys., 81379 München (DE)

(57) **Zusammenfassung**

Die Erfindung betrifft eine mobile Speichereinrichtung mit einem Massenspeicher, mit mindestens einer Aufnahmeschnittstelle für eine Speicherkarte, insbesondere eine Speicherkarte für digitale Bildphotographie, und mit mindestens einer Ausgabeschnittstelle.

## Beschreibung

Die Erfindung betrifft eine mobile Speichereinrichtung zur Speicherung von Daten, insbesondere Bilddaten, die beispielsweise mit einer Digitalkamera generiert worden sind.

Solche Digitalkameras als kleine, handliche Fotoapparate, insbesondere mit Zoomobjektiven, sind bekannt. Die mit diesen Kameras fotografierten Bilder können mit einer unterschiedlichen Auflösung in einem digitalen Bildspeicher abgelegt werden. Der bei herkömmlichen Fotoapparaten bekannte Sucher kann durch einen, insbesondere schwenkbaren, LCD-Monitor ersetzt sein. Zur Abspeicherung der Bilder können auch Kompressionsverfahren, insbesondere nach dem JPEG-Verfahren, eingesetzt werden.

Zur Kamera wird eine sogenannte Smart-Media-Karte (SMC) mitgeliefert, auf der die fotografierten Bilder gespeichert werden können. Die momentane Speicherkapazität dieser Karte beträgt 4 MB. Je nach Bildinhalt und in Abhängigkeit von der Auflösung des Bildwandlers können darauf zwischen 6 und 60 Bilder gespeichert werden. Die Smart-Media-Karte dient als austauschbarer Speicher. An Stelle der Smart-Media-Karte kann auch eine sogenannte MultiMediaCard (MMC) als wechselbare Solid-State-Speicherlösung beziehungsweise als sogenannter CompactFlash-Speicher in der Digitalkamera vorgesehen sein.

Die im Fotoapparat beziehungsweise auf einer der Speicherkarten gespeicherten Bilder können an einem herkömmlichen Fernsehgerät dargestellt, und auch zu Personalcomputern übertragen und dort bearbeitet werden. Ebenso ist eine Ausgabe der Bilder an einem Drucker möglich, wobei vorzugsweise Farbdrukker verwendet werden. Zur Ausgabe der Bilddaten weist die Digitalkamera eine serielle Schnittstelle auf.

Neben den Bildern beziehungsweise Bilddaten können unter Verwendung der Digitalkamera auch Texte und Sprachdaten oder Sprachaufzeichnungen auf der Flashcard gespeichert werden. Hierzu sind entsprechende Bedienelemente beziehungsweise ein Mikrofon an der Digitalkamera vorgesehen.

Die Digitalkamera liefert in an sich bekannter Weise Bilder (still video). Es ist denkbar, daß sie auch eine Aufeinanderfolge von Bildern oder eine Serie von "Bewegtbilder" (video) aufnimmt. Sie kann im letzteren Fall, zumindest für eine kurze Zeitspanne, sozusagen filmen.

Eines der Hauptprobleme in der digitalen Photographie ist die im Verhältnis zur rasanten Entwicklung bei der Bildauflösung und der Tonqualität immer noch vergleichsweise geringe Speicherkapazität der zum Teil auch sehr teuren Flashcards beziehungsweise Speicherkarten. Die verbesserte Auflösung erfordert zusätzlich einen teilweisen deutlich erhöhten Speicherbedarf aufgrund der anfallenden Datenmenge. Um eine "vollphotographierte" Speicherkarte wieder aufnahmebereit zu machen, muß derzeit der Inhalt, d.h. es müssen die Bild- und bedarfsweise die Text- und Tondaten auf einen Personalcomputer überspielt und anschließend die Daten auf der Speicherkarte gelöscht werden. Dies geschieht in der Regel durch Übertragung der Daten über eine serielles Kabel direkt von der Kamera zum Computer. Diese Methode widerspricht im Prinzip dem Mobilitätsanspruch des Photographen. Eine Lösung bietet bislang nur der Kauf von weiteren, teuren Flashcards.

Der Erfindung liegt die Aufgabe zugrunde, den Nutzen einer Digitalkamera für den Photographen zu erhöhen.

Diese Aufgabe wird erfindungsgemäß durch die im Patentanspruch 1 angegebenen Merkmale gelöst.

Im folgenden wird die Erfindung anhand eines Ausführungsbeispieles beschrieben.

Erfindungsgemäß wird dem Photographen zur Erhöhung der Speicherkapazität eine mobile Speichereinrichtung zur Verfügung gestellt.

Diese mobile Speichereinrichtung enthält ein Massenspeichermedium, beispielsweise eine Festplatte oder einen Microdrive. Weiter weist die Speichereinrichtung eine Aufnahmeschnittstelle auf, über die der Inhalt einer Speicherkarte auf den Massenspeicher übernommen werden kann. Die Aufnahmeschnittstelle besteht aus einer Leseeinrichtung für die Speicherkarte, d.h. aus einem sogenannten Flashcard-Reader. Zur flexiblen Anpassung an letztlich verschiedene Speicherkarten oder Digitalkameras können mehrere Aufnahmeschnittstellen vorgesehen sein. Hierdurch ist beispielsweise eine Kopplung von verschiedenen Speicherkarten möglich, die unterschiedlichen Standards, beispielsweise Smart-Media-Card (SMC), Compact-Flash, MultiMediaCard (MMC), etc. entsprechen.

Die mobile Speichereinrichtung verfügt weiter über eine Ausgabeschnittstelle, die drahtgebunden oder drahtlos realisiert sein kann. Die Ausgabe- beziehungsweise Datenschnittstelle kann hierzu ein serielles Kabel oder eine Bluetooth-Kommunikationsverbindung zu dem Endgerät sein, welches die Darstellung, Bearbeitung und/oder Ausdruck der gespeicherten Informationen beziehungsweise Daten ermöglicht. Ein solches Endgerät ist beispielsweise ein Personalcomputer, eine Set-Top-Box, oder sonstige Geräte zur Bildverarbeitung.

Eine Bedienoberfläche der erfindungsgemäßen Speichereinrichtung ermöglicht das Kopieren der Daten von der Speicherkarte auf den Massenspeicher, sowie das Übertragen der Daten vom Massenspeicher auf ein Endgerät. Weiter ist über die Bedienoberfläche das Löschen von Daten auf der Flashcard und/oder Bearbeiten der gespeicherten Daten möglich. Alternativ oder zusätzlich kann die Bedienoberfläche eine Sprachsteuerung aufweisen.

Zur netzunabhängigen Stromversorgung für den mobilen Einsatz kann die Speichereinrichtung wiederaufladbare Batterien aufweisen.

Die erfindungsgemäße mobile Speichereinrichtung ermöglicht dem Photographen ein einfaches Archivieren der Photos, d.h. der Bild- und gegebenenfalls der zusätzlichen Text- und Sprachdaten, ohne daß er an ein stationäres Gerät gebunden ist. Die Flashcard oder Speicherkarte der Digitalkamera ist nach dem Löschen der Daten sofort wieder einsatzbereit. Die Übertragung der gespeicherten Daten beziehungsweise des gespeicherten Bildarchivs kann später jederzeit direkt auf ein Ausgabegerät, wie beispielsweise einen Photodrucker oder einen Fernseher erfolgen. Zusätzlich bietet die mobile Speichereinrichtung die Möglichkeit, archivierte Bild-, Sprach- und Textinformationen immer griffbereit dabei zu haben.

## Patentansprüche

1. Mobile Speichereinrichtung
mit einem Massenspeicher,
mit mindestens einer Aufnahmeschnittstelle für eine Speicherkarte, insbesondere eine Speicherkarte für digitale Bildphotographie, und
mit mindestens einer Ausgabeschnittstelle.

2. Speichereinrichtung nach Anspruch 1 ,
mit Mitteln zum Löschen der Speicherkarte.
